# EUROPEAN PATENT APPLICATION

(11) **EP 4 524 380 A1**
(43) Date of publication of application: **19.03.2025**
(21) Application number: 24198757.7
(22) Date of filing: 05.09.2024
(51) Int. Cl.: F02B 63/04, H02J 3/38

(54) **CONTAINERIZED POWER SUPPLY WITH MULTIPLE DRIVE UNITS**

(30) Priority: 14.09.2023 GB 202314076
(71) Applicant: Aggreko UK Limited, Dumbarton G82 2RL (GB)
(72) Inventor: NEAGLE, Graeme, Dumbarton, G82 3RG (GB); GRAHAM, Kevin, Dumbarton, G82 3RG (GB)
(74) Representative: Marks & Clerk LLP

(57) **Abstract**

A containerized generator system for providing power to an external load and associated methods of producing and operating the containerized generator system. The containerized generator system comprises a container; and an odd number of generator sets, specifically three generator sets, no more no less, within the container, each generator set comprising an electrical generator and a drive unit configured to drive the electrical generator to generate power. The three generator sets are arranged in an 'L' shaped configuration in which two of the generator sets are provided side by side and a further generator set is located longitudinally of one of the side by side generator sets, i.e. in a direction parallel with a longitudinal direction of the container. One of more other components of the containerised generator system, such as treatment fluid storage tanks for treating exhaust gasses are located laterally of the further generator set and longitudinally of one of the side by side generator sets.

## Description

### FIELD

The present disclosure describes a containerized power supply unit having multiple drive units. Such units may comprise a plurality of drive units for driving electrical generators provided in a container.

### BACKGROUND

Containerised power supply systems are readily transportable, and can be deployed at sites at which supply of electric power to the site from a power distribution network is not available, prohibitive or insufficient for the needs at site. Such generator systems may also be used where there is an absence of power networks, or indeed where a typically-used power network has been disrupted in some manner (e.g. due to acts of nature). In some cases, the system may be used to feed power to an existing network.

Such transportable generator systems may be stand alone, or may be modular in so far as the power output at site can be provided cumulatively from multiple transportable generator systems, e.g. where a single power output is provided.

Typically, such generator systems can be deployed and operated from containers that meet standardised shipping container requirements (e.g. dimensions, etc.). Those containers may be modified from a standard container in so far as access panels, air inlet panels, or the like may be provided. In some cases, the generator systems may be deployed for a period of time, and then removed from site and used elsewhere. These standardised shipping containers are sometimes referred to as ISO containers, which have predefined sizes, shipping weight constraints, etc.

Traditionally, such containerized power supplies have contained an electrical generator operated by a drive unit such as a diesel or other fossil fuel engine and these units work well for a wide range of applications. However, providing an electrical generation system in a container, such as a standard ISO shipping container, having limited volume, presents challenges over providing such systems in unconstrained footprints. These problems are particularly acute in containerised generator systems that comprise multiple generators, e.g. configured for higher power operation. In this case, multiple generators units, engines and associated services all have to be packed inside the limited container footprint.

This background serves only to set a scene to allow a skilled reader to better appreciate the following description. Therefore, none of the above discussion should necessarily be taken as an acknowledgement that that discussion is part of the state of the art or is common general knowledge. One or more aspects/embodiments of the invention may or may not address one or more of the background issues.

### SUMMARY

Aspects of the present disclosure are defined by the independent claims appended herewith. Optional features are defined by the dependent claims appended herewith.

In some examples there are described containerised generator systems, and methods for power supply.

According to a first example is a containerized generator system, comprising:
a container; at least one electrical outlet configured to provide an electrical supply to external loads; and a plurality of generator sets, each generator set comprising an electrical generator and a drive unit configured to drive the electrical generator to generate power.

The containerized generator system may comprise an odd number of generator sets within the container. For example, the containerized generator system may comprise three generator sets, e.g. exactly three generator sets, no more, no less.

At least two of the generator sets may be provided side by side in the container, e.g. in one or more rows of generator sets. Each row of generator sets may comprise a plurality of generator sets distributed in the lateral direction of the container. The containerized generator system may comprise two generator sets in every row.

The at least two of the generator sets in the one or more rows may be in register in the longitudinal direction of the container. A front and back end of all of the generator sets in each row may be the same distance in the longitudinal direction of the container from the ends of the container. That is, each of the generator sets in each row may be the same distance from the longitudinal ends of the container as each other of the generator sets in that row. Each of the generator sets in each row may not extend beyond the other(s) of the generator sets in that row in the longitudinal direction of the container. The generator sets in each row may overlap each other when viewed from lateral sides of the container. Each of the generator sets may be elongate, i.e. longer than they are wide.

A further generator set, e.g. a single or solo generator set, may be spaced longitudinally in the container from the at least two side by side generator sets, e.g. the generator sets provided in the one or more rows. The further generator set may have no other generator sets laterally of the further container set in a lateral direction of the container and/or a lateral direction of the further generator set.

The containerized generator system may comprise a volume that is located laterally of the further generator set and longitudinally of one of the side by side generator sets, e.g. one of the generator sets in an adjacent row, wherein the volume does not contain any generator set. The volume may be of at least a length of the further generator set (in a longitudinal direction of the container) and a width of one of the side by side generator sets (in a lateral direction of the container). The volume may comprise at least a quarter of the container. One half of the container may house two generator sets and another half of the container may house only a single generator set and may optionally also comprise the volume that does not contain any generator set. Three quadrants or quarters of the container may each house a different generator set and the fourth quadrant or quarter of the container may comprise the volume that does not contain any generator set. At least one ancillary system of the containerized generator system may be provided in the volume. For example, at least one or more or each of: one or more treatment fluid storage tanks of an after treatment system for reducing exhaust gasses; a controller for controlling operation of the engines and/or generators; at least part of an electrical conditioning system for conditioning the electricity from the generator sets for output from the at least one electrical outlet; a communications system for remote monitoring and/or operation of the containerized generator system; and/or at least part of a cooling system for cooling the generator sets. The conditioning may comprise achieving a required electrical property at the at least one electrical outlet, such as voltage, current, impedance, frequency, phase, power and/or the like.

The container may be an elongate container. The container may be longer than it is wide, i.e. the container may have a long dimension and a short dimension. The longitudinal direction of the container may be a direction that extends generally in parallel with the long dimension of the container. The longitudinal direction of the container may be a direction that extends in parallel with the longest walls or side walls of the container. The lateral direction of the container may be perpendicular to the longitudinal direction. The lateral direction of the container may extend in parallel with the width or short dimension of the container, e.g. in parallel with the short walls or end walls of the container. Longitudinally, as used herein, may be along a direction that is in parallel with the longitudinal direction of the container and laterally, as used herein, may be along a direction that is parallel to the lateral direction of the container, e.g. in the width direction of the container and/or perpendicularly to the longitudinal direction.

The containerized generator system may contain three, e.g. exactly three, no more and no less, generator sets. In an alternative example, the containerized generator system may contain two or four, e.g. exactly two or exactly four, no more and no less generator sets.

The containerized generator system may comprise at least one after treatment system for reducing exhaust gasses, which may comprise one or more of: at least one catalyst, at least one after treatment system such as a diesel exhaust fluid (DEF) system or other fluid trap, at least one particle filter and/or the like. The containerized generator system may comprise one or more treatment fluid, e.g. diesel exhaust fluid (DEF), storage tanks for storing the treatment fluid, e.g. DEF, used by the at least one after treatment system. The treatment fluid storage tanks may be configured to store the treatment fluid not currently actively being used in the at least one after treatment system to clean the exhaust gases. The treatment fluid storage tanks may be configured to supply the treatment fluid to the at least one after treatment system, such as to the DEF system or other fluid trap, that cleans the exhaust gases. The at least one after treatment system, e.g. the DEF system or other fluid trap, may be provided within an exhaust system, in an exhaust gas flow path from an engine of a generator set to the exhaust vent that vents exhaust gases to atmosphere external to the containerized generator system.

Each generator set may be provided with its own at least one after treatment system, e.g. its own DEF system or other fluid trap, which may be provided in an exhaust gas path between the engine of the generator set and the exhaust vent for that generator set. Each after treatment system may be provided with its own treatment fluid storage tank. The treatment fluid storage tank for each generator set may supply, e.g. exclusively supply, treatment fluid for the at least one after treatment system of that generator set. Each treatment fluid storage tank may be connected to corresponding at least one after treatment system by a fluid carrying conduit, which may be a treatment fluid carrying pipe such as a flexible pipe. The containerized generator system may comprise a pump, suction or other fluid transport system for conveying the treatment fluid to the at least one after treatment system, e.g. to the DEF system or other fluid trap.

At least one or all of the one or more treatment fluid storage tanks may be located adjacent the further generator set. At least one or all of the one or more treatment fluid storage tanks may be provided laterally of the further generator set. At least one or all of the one or more treatment fluid storage tanks may be provided laterally of the drive unit of the further generator set. At least one or all of the one or more treatment fluid storage tanks may overlap the further generator set, e.g. the drive unit of the further generator set, in a side view of the container generator system. At least one or all of the one or more treatment fluid storage tanks may be provided laterally of the further generator set and longitudinally of one of the side by side generator sets, e.g. in the adjacent row of generator sets. At least one or all of the one or more treatment fluid storage tanks may be provided in the volume that does not contain any generator set and is located laterally of the further generator set and longitudinally of one of the side by side generator sets, e.g. in an adjacent row.

All of the generator sets in the row adjacent the further generator set may be arranged with the drive units of the generator sets towards the further generator set. The further generator set may be arranged with its drive unit towards the adjacent row of generator sets. The further generator set may be oriented in the opposite direction, e.g. at 180° to, the generator sets in the row adjacent the further generator set. The drive units of the further generator set and the generator sets in the row adjacent to the further generator set may all be adjacent and/or towards each other. At least one or all of the one or more treatment fluid storage tanks may be provided laterally of the drive unit of the further generator set and longitudinally of the drive unit of one of the generator sets in the adjacent row.

At least one or all of the one or more treatment fluid storage tanks may be provided laterally of and/or adjacent a side (e.g. a long side) of the drive unit of the further generator set and longitudinally of and/or adjacent an end (e.g. a short side or end) of the drive unit of one of the generator sets in the row of generator sets adjacent to the further generator set.

The containerized generator system may comprise one or more treatment fluid filler ports for filling the one or more treatment storage tanks with treatment fluid. The one or more treatment fluid filler ports may be provided in a wall of the container, e.g. a side wall of the container, and may be accessible from the outside of the container. Each treatment storage tank may be provided with its own treatment fluid filler port. The one or more treatment fluid filler ports may be coupled to the one or more treatment fluid storage tanks for fluid communication therewith, e.g. to allow the one or more treatment fluid storage tanks to be filled with treatment fluid via the one or more treatment fluid filler ports.

The container may be an ISO container. The container may be a 20ft (6.06m) long container, e.g. a 20ft (6.1m) ISO container. For example, the container may be substantially 8ft (2.43m) wide and/or 8.5ft (2.59m) high (e.g. a standard height ISO container) or 9.5ft (2.9m) high (e.g. a high cube ISO container). In other examples, the container may be a 40ft ISO container, e.g. 40ft (12.2m) long. The container may be in a generally cuboid form, e.g. having two long or elongate sides and two shorter ends, i.e. the container may be elongate and longer than it is wide. The container may be or comprise an ISO container. The container may comprise a base, a roof, two ends and two sides. The short dimensions of the container may be described herein as the ends, whereas the long dimensions of the container may be described herein as the sides of the container.

The electrical generator(s) may be or comprise an alternator. At least one or each drive unit may be an engine, such as a diesel engine, a gas engine (e.g. a natural gas, methane or hydrogen powered engine), an ethanol engine, a hydrotreated vegetable oil (HVO) engine or other combustion type engine. By providing a plurality of smaller drive units, there may be more flexibility and efficiency in how the power generation unit can be operated, e.g. a greater operating range may be efficiently achievable. However, providing a plurality of drive units of that size in an ISO container, particularly a 20ft (6.06m) ISO container may present significant challenges, particularly as access to the drive units to check, service and/or repair may be required.

Each generator set may be aligned in parallel with the longitudinal direction of the container, e.g. a longitudinal direction of at least one or all of the generator sets may be parallel to the longitudinal direction of the container.

The above arrangement may provide an efficient and cost effective containerized generator system having a good operating range and access but in a compact container footprint. It may be easier to fit and assemble the containerized generator system.

In examples described herein, the generator sets are arranged in rows and columns, e.g. in a grid. The generator sets in each row may be aligned in the longitudinal or front-back direction of the generator sets and/or the container.

In other examples, the generator sets may be staggered or offset in a longitudinal or front-back direction of the container and/or the generator sets. An end of at least one or each of the generator sets may extend beyond a corresponding end of at least one or each other generator sets, e.g. when seen from a side or profile view. An opposite end of the at least one or each other generator sets may extend beyond an opposite end of the at least one or each of the generator sets, e.g. when seen from a side or profile view. One end of at least one or each generator set may extend beyond a corresponding end of at least one or each other generator set and at least one other end of the at least one or each generator set may overlap with the at least one or each other generator set, e.g. when seen from a side or profile view.

Each generator set may be provided in parallel with at least one or each other generator set. At least two of the generator sets may be provided side by side. At least one generator set may be provided in the same orientation as at least one other generator set. Corresponding ends of the generator set may all face or be provided towards the same end of the container. Alternatively, each alternate row of generator sets may be inverted or rotated 180° relative to the generator set or sets in neighbouring rows. Each generator set may be identical.

The containerized generator system may comprise one or more exhaust systems. Each exhaust system may extend from the drive unit of one of the generator sets to the exhaust vent for venting exhaust gasses to an exterior of the container. Each exhaust system may comprise at least one portion of exhaust conduit. One or each of the exhaust systems may be formed from modular pipework. At least one or each exhaust system may comprise a silencer. At least one or each exhaust system may comprise the after treatment system, e.g. the DEF system or other fluid trap for cleaning exhaust gasses. The containerized generator system may comprise a plurality of the exhaust systems, and each drive unit may be provided with a respective, associated exhaust system. At least part, a majority or all of the exhaust system for a given drive unit may be provided or extend upwardly, above or higher than the associated drive unit. The exhaust vent may be provided in the roof of the container. The exhaust system may be configured to vent via the roof or other upper surface of the container. The exhaust vents for each exhaust system may clustered together at the centre of the roof of the container. The exhaust vents for each exhaust system may be closer to a centre of the roof of the container than they are to any of the peripheral edges of the roof of the container.

The after treatment system or systems may be provided above, higher than and/or overhead of the generator sets. Each exhaust system may comprise its own after treatment system, DEF system or other fluid trap. The after treatment system may be provided above, higher than and/or overhead of its associated generator set. The after treatment system may overlap its associated generator set in a plan view. At least part, e.g. at least the silencer and/or after treatment system, of the exhaust system of at least one or each drive unit may be positioned in a staggered or offset arrangement with respect to at least part, e.g. a silencer and/or after treatment system, of at least one or each other exhaust system. The silencer and/or after treatment system of the exhaust system of at least one or each drive unit may be positioned in an arrangement in which they are laterally and/or transversely staggered or offset (e.g. in the width and/or length direction) with respect to the container relative to a silencer and/or after treatment system of at least one or each other exhaust system.

At least part, such as an initial part, of the conduit of at least one or each exhaust system may extend or be angled upwardly, e.g. initially upwardly from an associated drive unit. At least part of the conduit of at least one or each exhaust system extends, e.g. initially extends, obliquely or transversely with respect to the longitudinal direction of the container and/or the associated drive unit.

At least a part, such as the initial part, of the conduit of at least one of the exhaust systems may extend upwardly, e.g. initially upwardly, from an associated drive unit and may transition through a bend to a subsequent part of the conduit that extends at an angle closer to the horizontal than the preceding, e.g. initial part of the conduit. At least the subsequent part of the conduit may form a double bend or kink in the conduit. The subsequent part of the conduit may be more angled away from the top or roof of the container relative to a preceding and/or further part of the conduit. The subsequent part of the conduit may extend generally horizontally in use or at least more horizontal that a preceding part of the conduit. The preceding part of the conduit may be the initial part of the conduit that extends from the drive unit.

At least part of the conduit of at least one or each exhaust system may extend in a direction that is parallel with, but off-centre or displaced in the transverse direction of the container and/or power unit from, the centre line in the longitudinal direction drive unit or container, e.g. in a longitudinal direction of the container and/or drive units. The at least part of the conduit of at least one or each exhaust system that extends in parallel may extend in parallel with at least part of the conduit of at least one other exhaust system, e.g. in a longitudinal direction of the container and/or drive units. The part that extends in parallel may be or comprise a part that is downstream or towards to exhaust outlet relative to the obliquely or transversely extending part of the conduit.

A further part of the conduit may be angled upwardly, e.g. toward the roof or top of the container, e.g. with respect to the subsequent part of the conduit. The further part of the conduit may connect to the exhaust vent located in the roof of the container. The silencer and/or after treatment system, e.g. the catalyst, may be provided downstream or towards to exhaust outlet relative to relative to the further part and/or the part that extends in parallel.

The containerized generator system may comprise at least one ventilation or cooling system. The ventilation or cooling system may be mounted at a top or upper half of the container. The ventilation or cooling system may be above, e.g. directly above, or higher than the associated generator set.

The containerized generator system may comprise a controller for controlling operation of the engines and/or generators, e.g. in order to control the electrical output of the containerized generator system, e.g. a voltage and/or current output by the containerized generator system. The controller may be selectively switchable between operation modes, e.g. responsive to user selection and/or responsive to a control algorithm. The controller may be configured to selectively turn selected drive units on and/or off, e.g. dependent on demand. The controller may be configured to vary the combination of drive units running at any time, e.g. dependent on demand. The controller may be configured to vary, e.g. individually vary, the operation or level of operation or output of the drive units and thereby the generators, e.g. dependent on demand.

The controller may be located laterally of the further generator set. The controller may be located laterally of the generator of the further generator set. The controller may be located longitudinally of one of the side by side generator sets in the row of generator sets. The controller may be located adjacent the treatment fluid storage tanks. The treatment fluid storage tanks may be located between the controller and one of the side by side generator sets in the row of generator sets. The controller may be located along part of a side wall, which may be a long wall, of the container. The controller may comprise a control panel that allows the user to interact with the controller, which may be accessible from outside the container, e.g. via the side wall of the container. The control panel may be provided in the same side wall of the container as the one or more treatment fluid filler ports. The controller may be provided in the volume that is located laterally of the further generator set and longitudinally of one of the generator sets e.g. in an adjacent row. The controller may at least partially overlap the generator of the further generator set in a side view of the containerized generator system.

The containerized generator system may comprise a crawl space, e.g. between the treatment fluid storage tanks and/or the controller and the further generator set. The crawl space may extend between the two side by side generator sets in the row of generator sets. The crawl space may be an end to end crawl space, which may allow end to end access from one end of the container to an opposite end of the container.

The containerised generator system may comprise one or more fuel tanks, for storing fuel for supply to the drive units of plurality of the generator sets. The containerised generator system may comprise a fuel tank for each drive unit, e.g. each drive unit may have a dedicated fuel tank. At least part or all of the fuel tank for each drive unit may be located underneath the respective generator set, e.g. underneath the drive unit of the generator set, which may be under the skid of the respective generator set.

Each generator set may be mounted on a skid or frame. Each generator set may be mounted on its own skid or frame, e.g. only one generator set may be provided on each frame. In this way, the generator sets may be easily inserted, or removed, e.g. for installation, replacement or maintenance.

In a second example described herein, there is a method of assembling, repairing or producing a containerized generator system according to the first example.

The method may comprise providing a container. The method may comprise inserting a plurality of generator sets into the container, each generator set comprising an electrical generator and a drive unit configured to drive the electrical generator to generate power. The method may comprise installing an odd number of generator sets into the container. The insertion of the plurality of generator sets into the container may comprise arranging two generator sets side by side to form at least one row of generator sets and arranging a further generator set that does not have any other generator set laterally of it, e.g. laterally of the further generator set in a lateral direction of the container.

The containerized electrical supply unit may be a containerized electrical supply unit according to the first example.

In a third example described herein, there is a method of operating the containerized generator system according to the first example. The method may comprise operating the containerized electrical supply unit so as to selectively run one or more of the drive units in order to drive the one or more electrical generators so as to generate electrical power. The method may comprise drawing power from one or more or all of the generator sets to an external load via one or more electrical outlets or connections of the containerized electrical supply unit. The method may comprise individually and/or independently operating one or more of the drive units in order to drive the one or more electrical generators so as to generate electrical power.

The containerized generator system described above may be a "drop and go" power supply arrangement that is easy to store and transport and can be deployed rapidly. The containerized generator system described above may be configured to provide power to power equipment external to the containerized generator system, i.e. it is intended to be a portable power source for providing power as a replacement, alternative or supplement to grid electrical supply.

Features analogous to those described in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### Description of the Drawings

Embodiments of the present invention will now be described, by way of example only, with reference to the accompanying drawings, which are:
- **Figure 1**: A cut-away plan view of a containerized generator system;
- **Figure 2**: A cut-away upper perspective view of the containerized generator system of Figure 1;
- **Figure 3**: A cut-away view from an end of the containerized generator system of Figure 1;
- **Figure 4**: A cut-away view from another end of the containerized generator system of Figure 1;
- **Figure 5**: A perspective view of a drive unit of the containerized generator system of Figure 1;
- **Figure 6**: A different perspective view of a drive unit of the containerized generator system of Figure 1;
- **Figure 7**: A side view of the containerized generator system of Figure 1;
- **Figure 8**: An opposite side view of the containerized generator system of Figure 1;
- **Figure 9**: A plan view of the containerized generator system of Figure 1;
- **Figure 10**: A view of an end of the containerised generation system of Figure 1;
- **Figure 11**: A detail view of a controller and control panel of the containerized generator system of Figure 1; and
- **Figure 12**: An alternative containerized generator system.

### Detailed Description of the Drawings

As noted above, packing generator sets and all ancillary components required to operate the generator sets into a standard (ISO) shipping container is challenging. This is particularly the case when the containerized generator system is in a "drop and go" configuration in which the containerized generator system is delivered with the generator sets and ancillary components in a fully connected and assembled configuration such that the containerized generator set need only be optionally fuelled, connected to an external load (e.g. a local electricity supply network or system) and switched on to supply electricity to the load. There are also considerations around whether it is better to provide one or a fewer number of larger generator sets or multiple or more smaller generator sets.

Described herein are examples of a containerized generator system for providing power to an external load and associated methods of producing and operating the containerized generator system. The containerized generator system comprises a container; and an odd number of generator sets, in some examples specifically three generator sets no more no less, within the container. Each generator set comprises an electrical generator and a drive unit configured to drive the electrical generator to generate power. In beneficial examples, the three generator sets are arranged in a generally 'L' shaped configuration in which two of the generator sets are provided side by side and a further generator set is located longitudinally of one of the side by side generator sets, i.e. in a direction parallel with a longitudinal direction of the container and/or along a longitudinal axis of one of the side by side generator sets. In examples, one of more treatment fluid storage tanks for treating exhaust gasses are located laterally of the further generator set and longitudinally of one of the side by side generator sets.

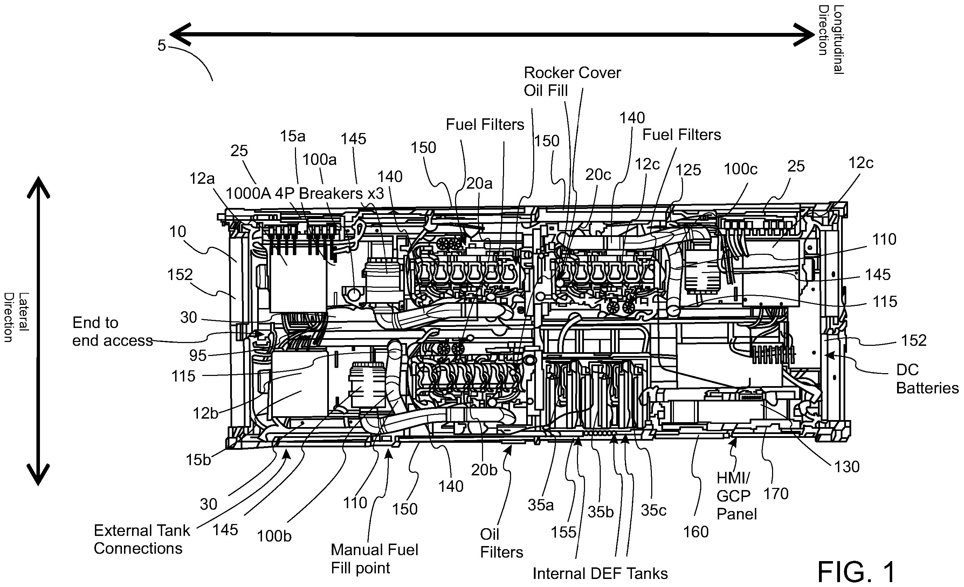

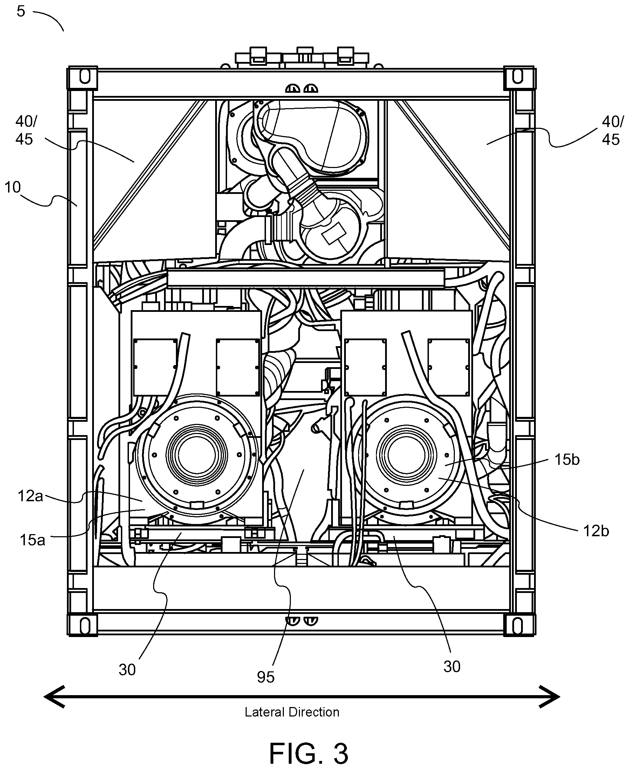

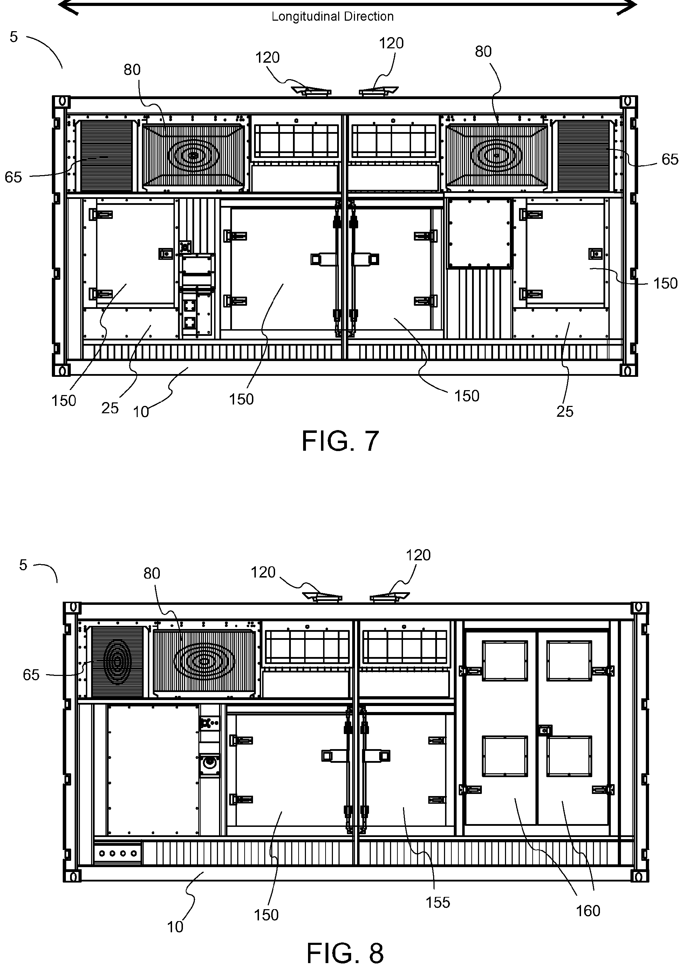

Figures 1 to 4 show cutaway views of the inside of a containerized generator system 5 comprising a container 10, which could be, for example, a standard 20 foot (6.1m long) hi-cube ISO container. Containers 10 are generally elongate, having two long sides and two short ends. As Figures 1 to 4 are cut-away views, part or all of the container 10 has been removed from the drawings in order to more clearly illustrate the components of the containerized generator system 5 that form the contents of the container 10. However, the components of the containerized generator system 5 are provided inside the container 10 as shown in Figures 7 to 9 such that the container 10 can be moved and handled in order to transport and arrange the entire containerized generator system 5. That is, the containerized generator system 5 is self-contained within the container 10 and is operable as a drop and play system that can be easily transported to a location and connected to an external power network or device in order to power the power network or device without any further construction.

The container 10 houses a plurality of generator sets 12a, 12b, 12c, each generator set 12a, 12b, 12c comprising an electrical generator 15a, 15b and a drive unit 20a, 20b, 20c. The electrical generator 15a, 15b, 15c is driven by the corresponding drive unit 20a, 20b, 20c in order to generate electricity that is provided from an electrical outlet 25 located in an external portion of the wall of the container 10 after appropriate electrical conditioning. Each drive unit 20a, 20b is in the form of a diesel engine that is connected to the associated generator 15a, 15b and operable to turn the associated generator 15a, 15b in order to generate electricity.

The electrical outlet 25 can be connected to electrical devices and/or an electrical distribution network such as a local electrical distribution network that are external to the electrical generation apparatus 5 in order to supply power to the external electrical devices and/or an electrical distribution network.

In this example, the containerized generator system 5 beneficially has exactly three generator sets 12a, 12b, 12c but in other examples, more or less generator sets can be provided, e.g. two or four generator sets.

Each of the generator sets 12a, 12b, 12c are elongate with the electrical generators 15a, 15b, 15c being provided on one end of the corresponding drive unit 20a, 20b, 20c. Each generator set 12a, 12b, 12c comprises a skid and/or frame 30 and at least the electrical generator 15a, 15b, 15c and drive unit 20a, 20b, 20c of the generator set 12a, 12b, 12c are mounted on the skid or frame 30. In this way, each generator set 12a, 12b, 12c is effectively a modular component that can be expediently installed or interchanged as a single unit.

In this example, all of the generator sets 12a, 12b, 12c are arranged to extend in the longitudinal direction of the container 10, i.e. a longitudinal axis of each generator set 12a, 12b, 12c is parallel with a longitudinal axis or direction of the container 10.

Two of the generator sets 12a, 12b are arranged side-by-side and are oriented in the same direction, i.e. the dive units 20a, 20b of both generator sets 12a, 12b are both arranged toward the same end of the container 10 and the electrical generators 15a, 15b of both generator sets 12a, 12b are both arranged toward the opposite end of the container 10. Both generator sets 12a, 12b are also aligned in register, i.e. opposite ends of the generator sets 12a, 12b in the longitudinal direction are substantially the same distance along the container 10 from either end of the container 10 in the longitudinal direction of the container 10.

The third generator set 12c is oriented at 180° to the other two generator sets 12a, 12b in a plan view. As such, the drive unit 20c of the third generator set 12 faces towards, and is adjacent to, one of the drive units 20a of one of the other generator sets 12a. As the two generator sets 12a, 12b are arranged side by side and the third generator set 12c is arranged with the drive unit 20c towards and adjacent to the drive unit 20a of one 12a of the two side by side generator sets 12a, 12b, all three drive units 20a, 20b, 20c are arranged in proximity to each other and such that a distal end of one of the drive units 20a is proximate to a distal end of the drive unit 20c of the third generator set 12c and the drive units 20a, 20b of the two generator sets 12a, 12b are arranged side by side. This arrangement makes it easier to route services to the drive units 20a, 20b, 20c.

The generator sets 12a, 12b, 12c are arranged generally in an L-shape, with two (first and second) of the generator sets 12a, 12b side by side in a row and a single (third) generator set 12c. The single (third) generator set is provided end-to-end, i.e. drive unit 20c to drive unit 20a, with one (the first) of the generators 12a in the first row. This leaves an available volume adjacent to, and to the side of, the single (third) generator set 12c and next to an end of the other (second) generator set 12b of the side by side generator sets. In this example, this volume adjacent and to the side of the single (third) generator set 12c and next to an end of the other (second) generator set 12b in the row is utilised for diesel exhaust fluid (DEF) storage tanks 35a, 35b, 25c.

In this example, a separate DEF storage tank 25a, 25b, 25c is provided for each drive unit 20a, 20b, 20c, such that there are three DEF storage tanks 35a, 35b, 35c. However, in other examples, there may be different numbers of DEF storage tanks, and one or more DEF storage tanks could be shared by one or more drive units. The DEF storage tanks 35a, 35b, 35c are in fluid communication with DEF filler ports for filling the DEF storage tanks with DEF, the filler ports being accessible from the exterior of the container, e.g. via a door or by the DEF filler ports being located on the outside of a wall of the container 10. The DEF storage tanks are in fluid communication with associated DEF systems, e.g. by a pipe, such as a flexible pipe. The DEF systems are located in the exhaust line between each drive unit 20a, 20b, 20c and an external exhaust vent that vents the exhaust gasses to an exterior of the container 10. The DEF systems are where the DEF is used to clean the exhaust gasses.

Beneficially, the DEF storage tanks 35a, 35b. 35c are located at one end of the volume closest to an end of the other (second) generator set 12b of the side by side generator sets 12a, 12b. In some examples, the DEF storage tanks 35a, 35b, 35c are located adjacent to the drive unit 20c of the other (second) generator set 12b of the side by side generator sets 12a, 12b. In this way, the DEF fluid can be more efficiently transported from the DEF storage tanks 35a, 35b, 35c to the DEF systems.

Other components can be located in any remaining part of the volume not used to accommodate the DEF storage tanks 35a-c. In the example shown, a controller 135 is provided in the volume, along a wall of the container 10 between the DEF storage tanks 35a-c and an end of the container 10. The controller 135 is electrically connected to the drive units 20a-c in order to control operation of the drive units 20a-c and thereby the electrical generators 15a-c to control the generation of electricity that is provided to the electrical outlet for powering external electrical devices or electrical distribution network. A control panel of the controller 135 is accessible from the exterior of the container 10 in order to allow operators to control the controller 135, and thereby the operation of the containerized generator system 5, in generating electricity that is provided at the electrical outlet 25.

In examples, the containerized generator system 5 comprises separate cooling systems 40 for cooling the drive units 20a, 20b and ventilation systems 45a, 45b, 45c for ventilating the interior of the container 10.

In examples, three ventilation systems 45a, 45b, 45c are provided, one for each generator set 12a, 12b, 12c. The ventilation systems 45a, 45b, 45c each comprise high mounted ventilation modules 50a, 50b, 50c, the ventilation modules 50a, 50b, 50c each comprising a ventilation outlet 55 and a ventilation fan unit 60a, 60b, 60c configured to suck air from outside, through ventilation inlets 65 in the side walls of the container, into the interior of the container 10 and out through a corresponding ventilation outlet 55. Particularly, the ventilation fan units 60a, 60b, 60c are configured to suck air out from a compartment of the container 10 that houses the generator sets 12a, 12b, 12c. The container 10 is provided with ventilation inlets 65, which in examples comprise louvered ventilation inlets 65 in sides of the container 10. In the present example, two ventilation inlets 65 are provided in one side of the container 10 adjacent the first generator set 12a and the further (third) generator set 12c and only a single ventilation inlet is provided in the opposite side of the container 10 that is adjacent the second generator set 12b. In this way, the ventilation fan units 60a, 60b, 60c are operable to suck air from outside of the container 10 into the interior of the compartment in the container that houses the generator sets 12a, 12b, 12c and then out through the corresponding ventilation outlets 55a, 55b, 55c. The majority or all of the ventilation systems 45a, 45b, 45c are provided higher than and/or above the generator sets 12a, 12b, 12c. This conveniently utilises an upper part of the container 10 and leaves more room for the generator sets 12a, 12b, 12c in the lower part of the container 10, allowing for easier insertion and/or replacement of the generator sets 12a, 12b, 12c and easier access to the generator sets 12a, 12b, 12c, e.g. for inspection and maintenance.

The container 10 houses the cooling systems 40 for cooling the generator sets 12a, 12b, 12c. The cooling systems 40 each comprise a cooling fan 75a, 75b, 75c. The cooling fans 75 can be, in examples, low noise centrifugal fans. The cooling fans 75 are provided adjacent an associated air inlet 80 and are arranged to suck air from outside the container 10 into the container 10 via the associated air inlet 80 and then force the air through a heat exchanger 85 in order to cool liquid coolant that is circulated to the drive units 20a, 20b, 20c. Thereafter, the air that has passed through the heat exchangers 85 is vented out via a cooling air outlet 90 in the roof of the container 10. In this way, the ventilation modules 50 and cooling fans 75 and heat exchangers 85 of the cooling systems 70 are mounted in an upper part of the container 10 higher than the generator sets 12a, 12b, 12c.

As noted above, each drive unit 20a, 20b is provided with an exhaust treatment system including the DEF system and optionally also a catalyst. Fitting the exhaust treatment system into the space constrained ISO container presents a considerable challenge and requires very specific layouts of the contents of the container 10, especially a standard ISO container, particularly a standard 20ft ISO container.

The containerized generator system 5 also comprises at least one fuel tank 105. In this example, each drive unit 20a, 20b could be provided with its own fuel tank 105, optionally with a fluid connector therebetween in order to balance out fuel levels or the fuel tanks could be independent and unconnected. In other examples, the fuel tank 105 is a common fuel tank shared between both drive units 20a, 20b. Additionally, the containerized generator system 5 is provided with an external fuel connection for allowing connection of a fuel pipe for providing fuel from an external source (e.g. an external tank or other fuel source) continuously or on demand.

The diesel exhaust fluid (DEF) system injects the DEF obtained from the DEF storage tanks 35a-c, which is a chemical (usually in liquid form), into the exhaust to remove undesirable combustion products such as (but not limited to) NOₓ from the exhaust gasses. This exhaust treatment system usually operates in conjunction with an appropriate catalyst. In this example, each drive unit 20a, 20b is provided with its own dedicated exhaust gas treatment fluid tank 35a-c for storing the DEF used to treat the exhaust gasses.

A crawl space 95 is optionally provided between the first and second generator sets 12a, 12b and also between the DEF storage tanks 12a, 12b, 12c and the further (third) generator set 12c. The crawl spaces allow easier access for repair, maintenance and assembly in a manner that makes good utilisation of the available space.

Each drive unit 20a, 20b respectively comprises a respective exhaust system 100a, 100b, 100c. Each exhaust system 100a, 100b, 100c comprises modular pipework that is connected together to define a particular flow path / conduit. Modular pipework can be optimised for any given design and/or manufacture, and may result in a cost effective and easier to assemble exhaust system, particularly when fitting into a container that is constrained in size and access, such as an ISO container. One or more or each of the sections of one or each exhaust system 100a, 100b, 100c described herein may be provided as or comprised in a separate module of the modular pipework system. In some particular examples, each exhaust system 100a, 100b, 100c comprises an upwardly extending section 105 that extends upwards from the associated drive unit 20a, 20b, 20c, a transition section 110 that extends from the upwardly extending section 105 with an orientation closer to the horizontal than the upwardly extending section 105. An upwardly extending outlet section 115 extends from the transition section 110 with an orientation that is closer to the vertical than the transition section 110. The outlet section 115 extends upwardly from the transition section 110 to an exhaust vent 120 that vents exhaust gases to atmosphere external to the containerized generator system.

The exhaust vents 120 for each exhaust system are clustered together at the centre of the roof of the container 10. For example, the exhaust vents 120 for each exhaust system may be closer, e.g. at least 50% closer, to the centre of the roof of the container 10 than they are to any peripheral edge of the roof of the container 10.

Optionally the DEF system 125 for dosing the exhaust treatment fluid from the DEF storage tanks 35a-c into the exhaust is provided in each exhaust system 100a, 100b, 100c, and in the example shown is provided in a bend of the exhaust system 100a, 100b, 100c.

The triple drive unit 20a, 20b, 20c arrangement may permit the drive units 20a, 20b, 20c to be operated together or individually, e.g. each drive unit 20a, 20b, 20c may be controlled to operate at the same output or individually to provide different outputs. In this way, a wide range of operations may be provided. Thus, the three drive units 20a, 20b, 20c, provides a high degree of flexibility over one or two larger drive units.

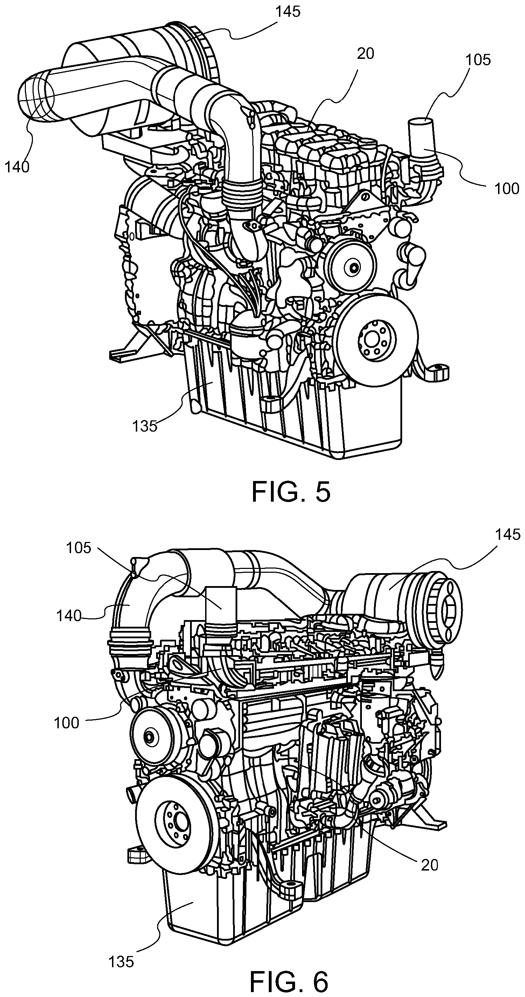

Figures 5 and 6 show the drive units 20a-c. The drive units 20a-c are diesel engines provided with a sump pan 135 at the bottom. The drive unit 20a-c comprises an air intake 140 coupled to an air filter 145. Air for combustion is fed into the drive unit 20a-c via the air filter 145 and air intake 140. The exhaust system 100 for exhausting combustion exhaust gasses from the drive unit 20a-c and conveying the exhaust gasses to the exhaust vent 120, via the DEF system 125, for venting externally of the container 10 extends upwardly from the drive unit 20a-c. Each drive unit 20a-c is provided with its own engine control unit (ECU) for controlling basic engine management functions.

Figures 7 to 9 show external views of the containerized generator system 5. Figures 7 and 8 show side views of the containerized generation system 5, which comprise the high level ventilation inlets 65 and cooling air inlets 80 in the sides of the container 10. Both sides of the container 10 contain doors 150 for accessing the generator sets 12a-12c, e.g. for maintenance and inspection. The side wall of the container 10 shown in Figure 7 has two high level ventilation inlets 65 and two cooling air inlets 80 as there are two generator sets 12a, 12c on this side of the container 10 and also comprises the electrical outlets 25 in the form of sockets for connecting and powering electrical connectors of an electrical distribution cable or network or external devices, etc. In contrast, the opposite side of the containerised generation system 5 shown in Figure 8 has a single high level ventilation inlet 65 and a single cooling air inlet 80 as only one generator set 12b is provided on that side of the container 10. The side of the containerised generation system 5 shown in Figure 8 also has a door 155 for accessing the DEF storage tanks 35a-c and a door 160 for accessing the control panel of the controller 130. In this way, access to the DEF storage tanks 35a-c and the controller 130 can be restricted simply by locking the doors 155, 160. Furthermore, as the DEF storage tanks 35a-c are provided in a lower part of the container 10 and adjacent the side wall, even though the DEF system 125 is provided above or higher than the generator sets 12a-12c, access for filling the DEF storage tanks 35a-c is easy.

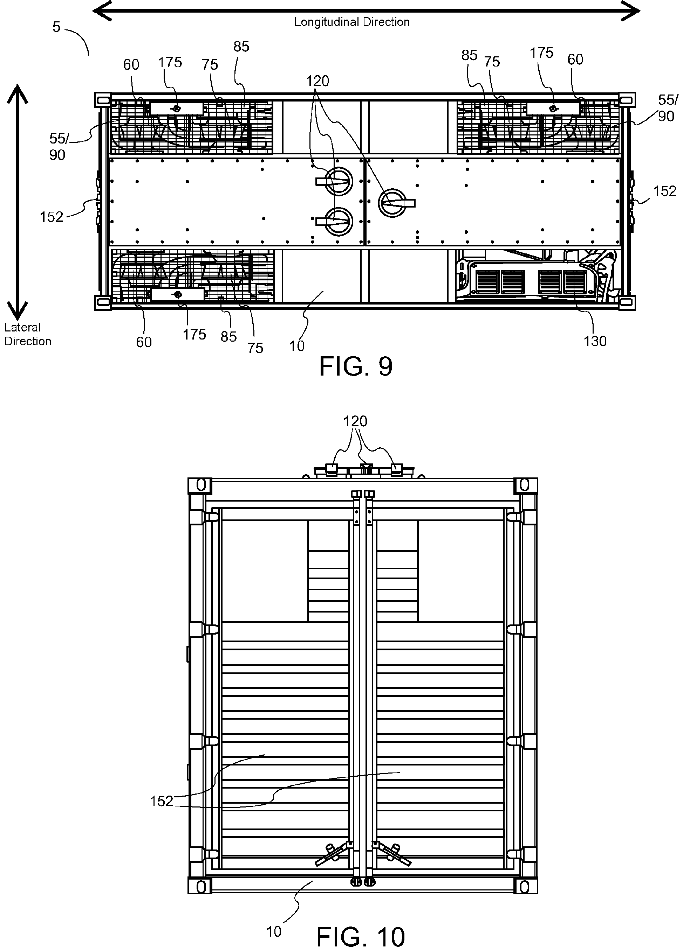

Figure 9 shows a plan view of the containerized generation system 5 from the outside. The exhaust vents 120 are clustered in the centre of the roof of the container 5. In this example, there are three exhaust vents 120, one for each exhaust system 100 of the three drive unit 20a-c. Each corner of the roof of the container 10 also contains a vent. Three of the vents function as both the ventilation outlet 55 for expelling air from the space inside the container 10 and the cooling air outlet 90 for expelling cooling air used to cool the generator sets 12a-12c, particularly air that is used to cool the heat exchangers 85 that in turn cool cooling fluid that is used to cool at least the drive units 20a-c of the generator sets 12a-c. These vents are provided generally above / directly upwardly of the ventilation fan units 60 and the cooling fans 75. Ports 175 for filling reservoirs of the heat exchangers 85 with cooling fluid (three ports in this instance, one for each heat exchanger 85, for each cooling system 70 for cooling the respective generator set 12a-c) are provided in the roof of the container 10. As the heat exchangers 85 are provided in the upper half of the container, higher than the generator sets 12a-c, then the roof of the container provides convenient access for topping up the cooling fluid.

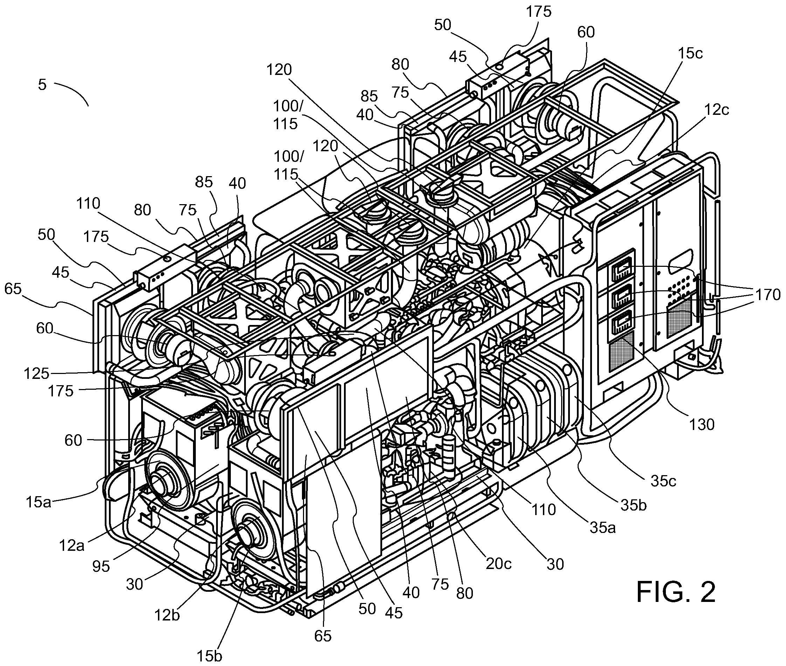

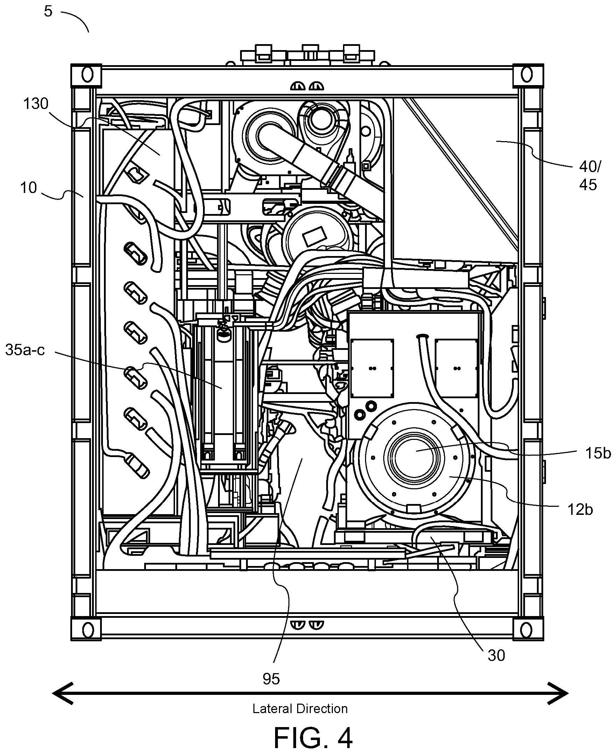

Figure 10 shows a view from the ends of the containerized generation system 5. Both ends of the container 10 are similar, with large double doors 152 for providing access into the interior of the container 10. As can be seen from Figures 2 and 4, the doors 152 at both ends of the container 10 give access to the crawl space 95 that gives end to end access down the centre of the interior of container 10 and also allows the generator sets 12a-c to be easily accessed for maintenance.

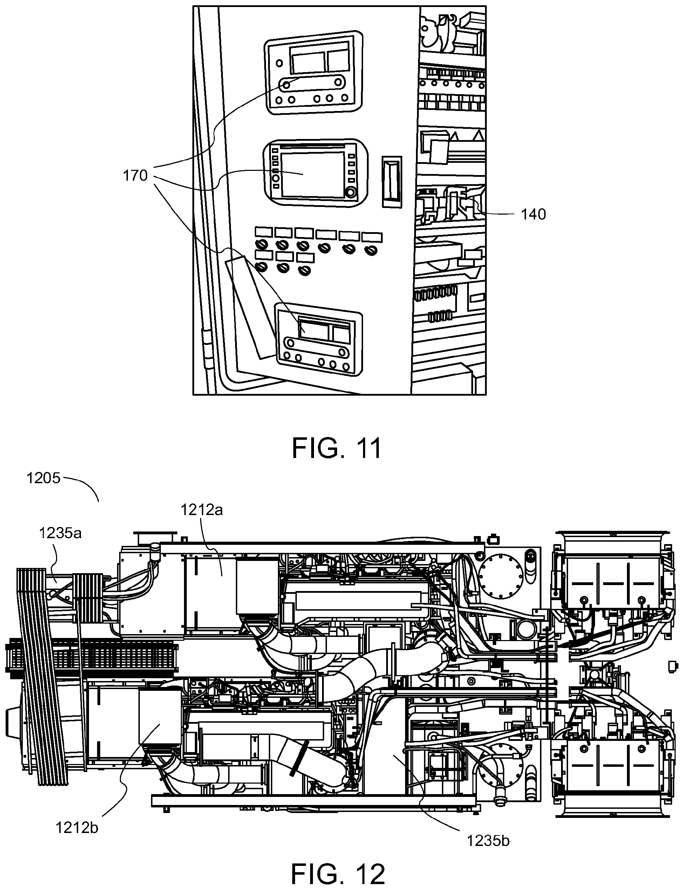

The controller 130 is shown in Figure 11. The controller 130 controls operation of the generator sets 12a-c in order to control the output of electricity from the containerized generator system 5 via the electrical outlet 25. Specifically, the controller 130 can individually control each drive unit 20a-20c to individually control the electrical power generator by each generator set 12a-12c. In this way, each generator set 12a-c can be individually controlled, e.g. the level of operation and/or generation of each generator set 12a-c is individually controllable by the controller 130 in order to provide greater control of the output of the containerized generator system 5. As can be seen from Figure 11, the controller 130 comprises one or more control panels 170 for allowing user input to the controller 130, e.g. of operational settings, set-points or parameters, and for providing operational data to the user. As noted above, the control panels 170 are accessible via doors 160 in on side of the container 10 to allow access to the control panel 170 to be restricted by locking the doors 160.

The specific examples are given in order to provide understanding and variations thereon would be apparent from the teaching provided herein. As such, the scope of protection is defined by the claims and not limited to the specific examples provided herein.

For example, Figure 12 shows an alternative containerized generator system 1205 that illustrates some potential variations to the system of Figures 1 to 11. For example, whilst three generator sets 12a-c are provided in the container 10 in the example of Figures 1 to 11, in the example of Figure 12, there are only two generator sets 1212a, 1212b. Furthermore, whilst in the example of Figures 1 to 11, the two side by side generator sets 12a, 12b are provided, i.e. each of the two side by side generator sets 12a, 12b are provide at substantially the same distance from each end of the container 10. In the example of Figure 12, the two generator sets 1212a, 1212b are staggered in the longitudinal (i.e. front-back) direction of the container. In the example of Figures 1 to 11, the DEF storage tanks 35a-c are provided in the volume laterally, i.e. to one side of, the third generator set 12c and longitudinally of one 12c of the two side by side generator sets, in the example of Figure 12, a DEF storage tanks 1235a, 1235b are provided at opposite ends of the respective generator sets 1212a, 1212b. As such, the containerized generator system 5 is not limited to that described above in relation to Figures 1 to 11, but can be altered, e.g. as outlined above or otherwise.

## Claims

1. A containerized generator system, comprising:
an elongate container that is longer than it is wide;
at least one electrical outlet configured to provide an electrical supply to external loads; and
a plurality of generator sets, each generator set comprising an electrical generator and a drive unit configured to drive the electrical generator to generate at least part of the electrical supply for provision via the at least one electrical outlet; wherein
there are an odd number of generator sets within the container;
each generator set is aligned in parallel with a longitudinal direction of the container, such that a longitudinal direction of each of the generator sets is generally parallel to the longitudinal direction of the container;
at least two generator sets of the plurality of generator sets are arranged side by side and distributed in a lateral direction of the container;
a single further generator set of the plurality of generator sets is located longitudinally with respect to the container relative to the at least two of the generator sets that are arranged side by side, the further generator set having no other generator sets laterally of the further container set in a lateral direction of the container.

2. The containerized generator system of claim 1 that has exactly three generator sets, no more, no less.

3. The containerized generator system of any preceding claim, comprising at least one ancillary system provided in a volume located laterally of the single further generator set and longitudinally of one of the at least two side by side generator sets, the at least one ancillary system comprising at least one or more or each of:
one or more treatment fluid storage tanks of at least one after treatment system for reducing exhaust gasses;
a controller for controlling operation of the engines and/or generators;
at least part of an electrical conditioning system for conditioning the electricity from the generator sets for output from the at least one electrical outlet;
a communications system for remote monitoring and/or operation of the containerized generator system; and/or
at least part of a cooling system for cooling the generator sets.

4. The containerized generator system of claim 3, comprising:
the at least one after treatment system for reducing exhaust gasses; and
the one or more treatment fluid storage tanks for storing treatment fluid used by the at least one after treatment system, wherein
the at least one after treatment system is located within in an exhaust gas flow path of an exhaust system and the treatment fluid storage tanks are configured to supply the treatment fluid to the at least one after treatment system via a treatment fluid pipe or other conduit;
and/or
at least one or all of the one or more treatment fluid storage tanks are located laterally of the drive unit of the further generator set and longitudinally of the drive unit of one of the side by side generator sets.

5. The containerized generator system of claim 4, comprising the controller for controlling operation of the generator sets to control the electrical output of the containerized generator system, wherein the treatment fluid storage tanks are closer to the drive units of the at least two side by side generator sets than the controller.

6. The containerized generator system of any of claims 3 to 5, wherein the controller is configured to individually and independently vary or otherwise control at least one of: the operation, a degree of operation and/or output of the drive units and thereby the generators of each generator set.

7. The containerized generator system of any preceding claim, wherein the further generator set is oriented in an opposite orientation to the at least two side by side generator sets.

8. The containerized generator system of claim 7, wherein the further generator set is arranged with its drive unit towards an end of the container closest to the at least two side by side generator sets and the drive units of the at least two side by side generator sets are all arranged with their drive units towards an end of the container closest to the further generator set.

9. The containerized generator system of claim 3 or any claim dependent thereon, comprising one or more treatment fluid filler ports for filling the one or more treatment storage tanks with treatment fluid, the one or more treatment fluid filler ports are in a side wall of the container, and accessible from the outside of the container.

10. The containerized generator system of any preceding claim comprising a plurality of exhaust systems, each exhaust system extending from the drive unit of one of the generator sets to an exhaust vent for venting exhaust gasses to an exterior of the container, wherein the exhaust vent is provided in an upper part or roof of the container.

11. The containerized generator system of claim 10 when dependent on claim 3, wherein each exhaust system comprises or is otherwise coupled to one of the after treatment systems for cleaning exhaust gasses, the after treatment systems being provided in an exhaust gas flow channel of the exhaust system between the drive unit and the exhaust vent, and wherein at least part or all of the at least one after treatment system is provided above, higher than and/or overhead of the generator sets.

12. The containerized generator system of claim 10 or claim 11, wherein:
at least an initial part of each exhaust system extends upwardly from an associated drive unit; and/or
the exhaust vents for each exhaust system are closer to a centre of the roof of the container than they are to any of the peripheral edges of the roof of the container.

13. The containerized generator system of any preceding claim, wherein at least one of:
the containerized generator system comprises at least one ventilation or cooling system mounted in the container so as to be higher than the generator sets;
the containerized generator system comprises at least one crawl space, wherein the at least one crawl space extends between the at least the treatment fluid storage tanks and the further generator set and/or between the two side by side generator sets and/or is an end to end crawl space, that allows end to end access from one end of the container to an opposite end of the container;
and/or
the containerised generator system is a modular system having a plurality of modules, each module comprising one of the generator sets, including the drive unit and electrical generator of the generator set, mounted on its own platform, frame or skid.

14. A method of assembling, repairing or producing a containerized generator system according to any preceding claim, the method comprising:
providing a container;
inserting a plurality of generator sets into the container, each generator set comprising an electrical generator and a drive unit configured to drive the electrical generator to generate power, so that an odd number of generator sets are installed in the container for generating electrical power at an outlet of the container.

15. A method of operating the containerized generator system according to any of claims 1 to 13, the method comprising selectively operating one or more of the drive units in order to drive the one or more electrical generators so as to generate electrical power that is provided to an external load via one or more external electrical connections of the containerized electrical supply unit.
